# EUROPÄISCHE PATENTANMELDUNG

(11) **EP 2 733 890 A2**
(43) Veröffentlichungstag der Anmeldung: **21.05.2014**
(21) Anmeldenummer: 13189460.2
(22) Anmeldetag: 21.10.2013
(51) Int. Cl.: H04L 12/24, H02J 13/00, G06Q 50/00, H04B 3/54, H04Q 9/00

(54) **Verfahren zur Topologieerkennung in einem Niederspannungsnetz**

(30) Priorität: 15.11.2012 DE 102012220846
(71) Anmelder: Siemens Aktiengesellschaft, 80333 München (DE)
(72) Erfinder: Pitz, Richard, 1040 Wien (AT)

(57) **Zusammenfassung**

Die Erfindung betrifft ein Verfahren zur Topologieerkennung in einem Niederspannungsnetz (NN). Dieses Niederspannungsnetz (NN) weist eine Mehrzahl an dezentralen Einheiten (Z1, ..., Z8) wie z.B. Zähler, Lastschaltgeräte, etc. auf, welchen wenigstens ein Verbraucher und/oder Erzeuger zugeordnet ist. Weiterhin ist im Niederspannungsnetz (NN) zumindest eine Zentraleinheit (ZE) vorgesehen, von welcher die dezentralen Einheiten (Z1, ..., Z8) mittels Befehlsnachrichten adressierbar sind. Von der Zentraleinheit (ZE) wird jeweils eine ausgewählte dezentrale Einheit (Z1, ..., Z8) durch eine Befehlsnachricht zum Aussenden einer jeweiligen Identifikation mit zumindest einer vordefinierten Sendeleistung (S1, S2, S3) aufgefordert (1). Von der jeweils ausgewählten dezentralen Einheit (Z1, ..., Z8) wird die Identifikation in Form einer Identifikationsnachricht mit der vorgegebenen Sendeleistung (S1, S2, S3) ausgesendet (2). Diese Identifikationsnachricht wird von allen weiteren dezentralen Einheiten (Z1, ..., Z8) und gegebenenfalls von der Zentraleinheit (ZE) selbst temporär abgespeichert (3), wenn von diesen die Identifikationsnachricht empfangen worden ist. Wurden alle dezentralen Einheiten (Z1, ..., Z8) zum Aussenden einer Identifikationsnachricht aufgefordert, werden von der Zentraleinheit (ZE) alle gespeicherte Identifikationsnachrichten abgefragt und analysiert (4), um einfach und automatisch eine Anordnung der dezentralen Einheiten (Z1, ..., Z8) sowie eine eigene Position im Niederspannungsnetz (NN) abzuleiten und um z.B. jene dezentralen Einheiten (Z1, ..., Z8) herauszufinden, bei welchen z.B. eine Verletzung eines Spannungsbandes nach oben und/oder unten sehr wahrscheinlich ist.

## Beschreibung

### Technisches Gebiet

Die Erfindung betrifft allgemein das Gebiet der Energieversorgungsnetze. Im Speziellen bezieht sich die vorliegende Erfindung auf ein Verfahren zur Topologieerkennung in einem Energieversorgungsnetz bzw. in einem Niederspannungsnetz, über welches Verbraucher-Einheiten wie z.B. Haushalte, Industrieanlagen, Wohneinheiten etc. mit elektrischer Energie versorgt werden. Dabei umfasst das Niederspannungsnetz eine Mehrzahl an dezentralen Einheiten, welchen jeweils wenigstens ein Verbraucher und/oder ein Erzeuger zugeordnet ist, sowie eine Zentraleinheit, von welcher an die dezentralen Einheiten Nachrichten wie z.B. Befehlsnachrichten gesendet und von den dezentralen Einheiten Antworten empfangen werden können.

### Stand der Technik

Die Versorgung von dezentral angeordneten Verbrauchern wie z.B. in Industrieanlagen, Wohngebäuden, Haushalten, etc. mit elektrischer Energie erfolgt in der Regel über Energieversorgungsnetze, vor allem über so genannte elektrische Niederspannungsnetze. Unter einem Energieversorgungsnetz wird dabei üblicherweise ein Netzwerk von elektrischen Leitungen verstanden, in welchem physikalische Vorgänge durch die so genannten Kirchhoff'schen Regeln beschrieben werden können, und durch welches elektrische Energie oder elektrischer Strom von Energieerzeugern (z.B. leistungsfähigen Kraftwerksbetreiber, etc.) zu den Verbrauchern (z.B. Geräten in Industrieunternehmen, Haushalte, etc.) transportiert und verteilt wird. Für diesen Transport von Energie bzw. elektrischem Strom zu den Verbrauchern sind üblicherweise drei Versorgungsebenen mit verschiedenen, festgelegten Spannungsbereichen vorgesehen. Diese Versorgungsebenen werden daher nach dem Spannungsbereich, bei welchem elektrische Energie übertragen wird, eingeteilt. Dabei gibt es üblicherweise eine Hochspannungsebene bzw. ein Hochspannungsnetz, eine Mittelspannungsebene bzw. ein Mittelspannungsnetz und für eine Feinverteilung der Energie bzw. des elektrischen Stroms an die Verbraucher eine Niederspannungsebene bzw. Niederspannungsnetze.

Für die Feinverteilung der Energie wird dann die Niederspannungsebene bzw. die Niederspannungsnetze mit einem Spannungsbereich z.B. in Mitteleuropa zwischen ca. 230/400 Volt bis zu 1000 Volt genutzt. Ein Niederspannungsnetz wird üblicherweise regional über Transformatorstationen aus einem übergeordneten Mittelspannungsnetz gespeist. D.h. die Energie wird durch Transformatorstationen von der Mittelspannungsebene auf den Spannungsbereich der Niederspannungsebene transformiert und damit beispielsweise über das Niederspannungsnetz z.B. private Haushalte, kleinere Industriebetriebe, etc. versorgt. Ein Anschluss der Verbraucher - d.h. der Strom bzw. Energie verbrauchenden Geräten in Industrieunternehmen, Haushalten, Wohneinheiten, etc. erfolgt üblicherweise über Leitungen, in welchen dezentrale Einheiten - meist z.B. Stromzähler zur Verbrauchsmessung - angebracht sind. Diesen dezentralen Einheiten sind dann die jeweiligen Verbraucher der Verbraucher-Einheit (z.B. Industrieunternehmen, Haushalten, Wohneinheiten, etc.) zugeordnet. Um einen Anschluss von so genannten einphasigen Verbrauchern zu ermöglichen, sind Niederspannungsnetze üblicherweise als Vierleitersysteme aufgebaut.

Ein Übergang von herkömmlichen Energieversorgungsnetzen mit zentraler Energie- bzw. Stromerzeugung in leistungsfähigen Kraftwerken mit hoher Verfügbarkeit zu einer Energieversorgung mit dezentraler Energie-/Stromerzeugung und dezentraler Einspeisung, insbesondere auf Basis erneuerbarer Energien wie z.B. mit Photovolaik-, Windkraft- oder Biogasanlagen, etc., bringt neue Herausforderungen im Bereich der Spannungshaltung vor allem auf der Niederspannungsebene bzw. in den Niederspannungsnetzen. Bei herkömmlichen Energieversorgungsnetzen mit einer zumeist zentralen bzw. hierarchischen Struktur wird insbesondere im Bereich des Niederspannungsnetzes die Energie immer von der jeweiligen Ortsnetz- bzw. Transformatorstation über Leitungsstränge zu den jeweiligen Verbraucher-Einheiten (z.B. Industrieunternehmen, Haushalten, Wohneinheiten, etc.) transportiert. Bei dezentraler Energie- bzw. Stromerzeugung wird auch direkt in die unteren Spannungsebenen - also auch in Niederspannungsnetze oder das Mittelspannungsnetz - erzeugte Energie eingespeist. Das bedeutet, dass über die dezentrale Einheit nun auch Energie bzw. elektrischer Strom in umgekehrter Flussrichtung - also von der Verbraucher-Einheit (z.B. Industrieunternehmen, Haushalten, Wohneinheiten, etc.), welcher der jeweilige dezentrale Energieerzeuger (z.B. Photovoltaik-Anlage, etc.) zugeordnet ist, über die dezentrale Einheit in das Niederspannungsnetz und von diesem gegebenenfalls über eine Transformatorstation in das Mittelspannungsnetz zurückgespeist wird.

Dies kann zu erheblichen Problemen bei der Betriebssicherheit und -zuverlässigkeit des Energieversorgungsnetzes wie z.B. zu Spannungsschwankungen im Niederspannungsnetz führen. So können sich z.B. durch ein Zurückspeisen von Energie in einem Leitungsstrang an den jeweiligen Enden eine Spannungsschwankung nach unten bzw. in Nähe der Transformatorstation eine Spannungsschwankung nach oben kritisch auswirken. Daher ist es unter anderem notwendig, die entsprechenden betroffenen dezentralen Einheiten (z.B. Zähler, Lastschaltgeräte, etc.), welchen beispielsweise Erzeuger und/oder neue Verbraucher (z.B. Ladestationen aus dem Bereich der E-Mobilität, etc.) zugeordnet sind, zu identifizieren und die entsprechende Topologie des jeweiligen Niederspannungsnetzes bzw. Ortsnetzes zu kennen.

Bei einer Inbetriebnahme von dezentralen Einheiten wie z.B. Zählern zur Stromverbrauchsmessung, Lastschaltgeräte, etc. in einem Niederspannungsnetz zur Energiefeinverteilung wird allerdings oft beispielsweise nur erfasst, in welchem Ortsnetz, bei welchem Kunden bzw. bei welcher Verbraucher-Einheit, etc. eine dezentrale Einheit installiert worden ist. Eine Erfassung einer Zu- und Anordnung z.B. zu den einzelnen Leitungssträngen oder einer Position der dezentralen Einheiten erfolgt meist nicht, da die Leistungsstränge z.B. nicht in einem geografischen Informationssystem, etc. abgebildet werden. Teilweise sind gegebenenfalls Aufzeichnungen und/oder Pläne über einen Netzausbau vorhanden, in welche z.B. eine Kabelführung oder eine Führung der Leitungsstränge dokumentiert ist.

Allerdings werden diese Pläne häufig nicht aktualisiert, wodurch eine Identifizierung der z.B. in einem Leitungsstrang befindlichen dezentralen Einheiten mit den jeweils zugeordneten Verbrauchern und/oder Erzeugern nur schwer oder gar nicht möglich ist. Damit ist es auch kaum möglich, jene dezentralen Einheiten großer Verbraucher und/oder Erzeuger ausfindig zu machen, bei welchen Spannungsschwankungen nach oben und/oder nach unten mit sehr hoher Wahrscheinlichkeit auftreten werden. Insbesondere ist es aufgrund von wahrscheinlichen Spannungsschwankungen vor einer Installation eines Erzeugers wie z.B. einer Photovoltaik-Anlage notwendig, durch Erfahrungswerte und/oder durch Schätzungen eine Vertretbarkeit für das jeweilige Niederspannungsnetz zu bestimmen. Dabei werden meist große Sicherheitsreserven verwendet, da die tatsächlichen Werte nicht bekannt sind. Dies kann z.B. eine mögliche Installation eines Erzeugers in einem Niederspannungsnetz verhindern.

Weiterhin ist eine händische Erfassung der Topologie oder eine händische Aktualisierung gegebenenfalls vorhandener Pläne aufgrund der hohen Komplexität der Niederspannungsnetze wenig zielführend.

Aus der Schrift WO 95/01030 A1 ist ein System und ein Verfahren zur Topologieerkennung in einem Niederspannungsnetz bekannt. Dabei werden von einer zentralen Steuereinheit Nachrichten an dezentrale Messeinheiten mit so genannter Repeater-Funktionalität gesendet. Von diesen Messeinheiten können dann Nachrichten an die Steuereinheit oder an weitere Messeinheiten weitergeleitet werden. Für eine Topologieerkennung oder Aktualisierung der in der Steuereinheit gespeicherten Topologie wird dabei von der Steuereinheit eine spezielle Nachricht ausgesendet und von jeder Messeinheit wird dann eine Identifikation - ein so genanntes Label - in diese Nachricht bzw. in einen in dieser Nachricht enthaltenen Sendeliste einfügen. Die derart modifizierte Nachricht wird dann beispielsweise als Antwortnachricht an die Steuereinheit zurückgesendet werden, welche dann die mittels dieser Nachrichten erhaltenen Identifikation entsprechend speichern bzw. anhand dieser eine gespeicherte Topologie aktualisieren kann. Allerdings führt dieses Verfahren, insbesondere bei komplexen Niederspannungsnetzen zu einem hohen Datenaufwand in der Steuereinheit wie im Netz selbst, da viele Nachrichten von der Steuereinheit und/oder den Messeinheiten verarbeitet und weitergeleitet werden, wodurch eine Aufzeichnung der Netztopologie mit einem großen Aufwand für die Auswertung der Daten verbunden ist.

Aus der Schrift DE 10 2011 001 668 A1 ist ebenfalls ein Verfahren zur Topologieerkennung in einem Niederspannungsnetz bekannt. Dabei umfasst das Energienetz spezielle Anschlussboxen, welche einerseits über ein Energiekabel an jeweilige Verbraucher angeschlossen sind, und andererseits über Energiekabel mit den jeweils benachbarten Anschlussboxen verbunden sind. Nach erfolgter Verkabelung kann dann die Topologie der Energieverteilung und damit den Energieverteilungsnetzes automatisch erkannt und nachgebildet werden. Dazu wird von einer Anschlussbox eine Identifikation über das Energiekabel an die zumindest eine benachbarte Anschlussbox übertragen. Allerdings ist dabei das Erkennen der Topologie nur auf das Erkennen von benachbarten Anschlussboxen in einem Leitungsstrang beschränkt, da die Anschlussboxen durch die Energiekabel immer nur kettenförmig verbunden sind. Für komplexe Netzstrukturen ist das in dieser Schrift offenbarte Verfahren nicht geeignet, da es zu einem großen Aufwand - vor allem bei der Installation der Anschlussboxen - führt.

### Darstellung der Erfindung

Der Erfindung liegt daher die Aufgabe zugrunde, ein Verfahren anzugeben, durch welches auf einfache und effiziente Weise eine Anordnung von dezentralen Einheiten in einem Niederspannungsnetz automatisch und ohne großen Aufwand erfasst werden kann.

Diese Aufgabe wird durch ein Verfahren der eingangs angeführten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem von einer Zentraleinheit im Niederspannungsnetz eine jeweils ausgewählte dezentrale Einheit wie z.B. ein Zähler oder ein Lastschaltgerät, etc. durch eine Befehlsnachricht gezielt angesprochen und durch diese Befehlsnachricht zum Aussenden ihrer jeweiligen Identifikation mit zumindest einer vordefinierten Sendeleistung aufgefordert wird. Von der jeweils ausgewählten dezentralen Einheit wird dann die Identifikation als Identifikationsnachricht mit der zumindest einen definierten und von der Zentraleinheit vorgegebenen Sendeleistung ausgesendet. Dann wird die ausgesendete Identifikation der jeweils ausgewählten dezentralen Einheit von allen jenen weiteren dezentralen Einheiten im Niederspannungsnetz temporär abgespeichert, von welchen die Identifikationsnachricht bei der zumindest einen vorgegebenen Sendeleistung empfangen werden konnte. D.h. die Identifikationsnachricht wird durch die Nutzung der vordefinierten Sendeleistung nur von jenen dezentralen Einheiten empfangen und gespeichert, welche sich in direkter Reichweite der ausgewählten, aussendenden dezentralen Einheit befinden. Weiterhin besteht in vorteilhafter Weise die Möglichkeit, dass von der Zentraleinheit selbst empfangene Identifikationsnachrichten der jeweils ausgewählten dezentralen Einheit gespeichert werden, wenn diese von der Zentraleinheit bei der vorgegebenen Sendeleistung empfangen werden können.

Der Hauptaspekt des erfindungsgemäßen Verfahrens besteht darin, dass durch ein Erfassen, von welchen dezentralen Einheiten durch andere dezentrale Einheiten bzw. von welchen dezentralen Einheiten durch die Zentraleinheit bei einer vordefinierten Sendeleistung Identifikationsnachrichten empfangen werden können, automatisch eine Topologie des Niederspannungsnetzes bzw. wie die dezentralen Einheiten im Niederspannungsnetz angeordnet sind, abgeleitet werden kann. Es ist automatisch und auf einfache Weise z.B. feststellbar, welche dezentralen Einheiten in Nähe einer Ortsnetzstation bzw. in Nähe einer Transformatorstation oder welche dezentralen Einheiten entlang oder am Ende eines Leitungsstranges angebracht sind. Die dezentralen Einheiten des Niederspannungsnetzes werden dazu in beliebiger Reihenfolge von der Zentraleinheit zum Senden der Identifikationsnachricht bei vordefinierter Sendeleistung aufgefordert. Das bedeutet, die Abfrage wird zentral durch die Zentraleinheit, welche beispielsweise bei oder in Nähe der Ortnetzstation bzw. der Transformatorstation angebracht sein kann, gesteuert. Durch die zusätzliche Möglichkeit, dass auch von der Zentraleinheit Identifikationsnachrichten abgespeichert werden können, kann auch sehr einfach die Position der Zentraleinheit im Niederspannungsnetz bzw. in Relation zu den dezentralen Einheiten ermittelt werden.

Insbesondere bei einer dezentralen Einspeisung und/oder großen Verbrauchern (z.B. Ladestationen für E-Mobility, Industrieanlagen, etc.) können mittels des erfindungsgemäßen Verfahrens sehr einfach jene dezentralen Einheiten herausgefunden werden, welchen diese Erzeuger und/oder Verbraucher zugeordnet sind, und damit jene dezentralen Einheiten, bei welchen eine Verletzung des Spannungsbandes nach oben bzw. nach unter sehr wahrscheinlich ist. Durch die mittels des erfindungsgemäßen Verfahrens automatisch ermittelbare Topologie des Niederspannungsnetzes ist es auch möglich, Einspeisungen und/oder große Lasten auf einzelnen Leitungssträngen selektiv abzuschalten, da nun betroffene dezentrale Einheiten identifiziert werden können. Auch Veränderungen der Topologie des Niederspannungsnetzes z.B. durch ein Zusammenschalten von Leitungssträngen oder Ortsnetzstationen können so rasch und einfach festgestellt und beispielsweise dokumentiert werden. Die gegebenenfalls geänderte Anordnung der einzelnen dezentralen Einheiten und eventuell auch jene dezentralen Einheiten, welche an den Enden der Leitungsstränge angeschlossen sind, können so ermittelt werden. Dadurch kann auch auf einfache Weise und ohne großen Aufwand eine Aufzeichnung der Topologie eines Niederspannungsnetzes automatisiert aktualisiert bzw. aktuell gehalten werden.

Es ist daher auch vorteilhaft, dass die in den dezentralen Einheiten und/oder der Zentraleinheit gespeicherten Identifikationsnachrichten durch die Zentraleinheit abgefragt und analysiert werden. Durch die Abfrage und Analyse der gespeicherten Identifikationsnachrichten durch die Zentraleinheit kann auf einfache Weise zentral die Topologie bzw. die Anordnung der dezentralen Einheiten im Niederspannungsnetz bestimmt werden. Von der Zentraleinheit wird dadurch der gesamte Prozess der Topologie-Ermittlung zentral gesteuert. Dazu können von der Zentraleinheit beispielsweise der Reihe nach die von den dezentralen Einheiten im Niederspannungsnetz gespeicherten Identifikationsnachrichten abgefragt, eingesammelt, ausgewertet und dargestellt werden. In der Zentraleinheit ist dann z.B. eine Darstellung der Topologie des Niederspannungsnetzes verfügbar und bekannt, wie die dezentralen Einheiten sowie die Zentraleinheit im Niederspannungsnetz - insbesondere entlang der jeweiligen Leistungsstränge - angeordnet sind.

Weiterhin ist es auch günstig, wenn von der Zentraleinheit selbst ebenfalls eine Identifikationsnachricht mit zumindest einer vordefinierten Sendeleistung ausgesendet wird. Diese Identifikationsnachricht kann dann von jenen dezentralen Einheiten im Niederspannungsnetz temporär abgespeichert werden, von welchen die Identifikationsnachricht der Zentraleinheit bei der vordefinierten Sendeleistung empfangen worden ist. Damit kann auf sehr einfache Weise auch eine Position der Zentraleinheit im Bezug auf die dezentralen Einheiten im Niederspannungsnetz herausgefunden bzw. bestimmt werden.

Bei einer zweckmäßigen Weiterbildung des erfindungsgemäßen Verfahrens werden von der Zentraleinheit ausgesendete Befehlsnachrichten an die jeweilige ausgewählte dezentrale Einheit von den weiteren im Niederspannungsnetz befindlichen dezentralen Einheiten wiederholt. Das bedeutet die weiteren im Niederspannungsnetz befindlichen dezentralen Einheiten fungieren als eine Art "Repeater" für die jeweils ausgewählte Einheit. Dadurch wird auf sehr einfache Weise sichergestellt, dass die jeweils ausgewählte dezentrale Einheit die Befehlsnachricht der Zentraleinheit erhält - auch wenn diese dezentrale Einheit beispielsweise aufgrund einer Entfernung im Niederspannungsnetz von der Zentraleinheit nicht direkt adressiert werden kann. Damit wird dann auch sichergestellt, dass eine möglichst vollständige Erfassung der dezentralen Einheiten und der Topologie des Niederspannungsnetzes automatisch erzielt wird.

Es ist vorteilhaft, wenn einer jeweils ausgewählten dezentralen Einheit zumindest eine weitere - idealer Weise niedrigere - Sendeleistung zum Senden der Identifikationsnachricht von der Zentraleinheit vorgegeben wird. Dies kann beispielsweise dadurch erfolgen, dass in der Befehlsnachricht der Zentraleinheit zumindest eine weitere vordefinierte Sendeleistung vorgegeben wird. Von der jeweils ausgewählten dezentralen Einheit wird die Identifikationsnachricht dann beispielsweise zuerst mit einer ersten Sendeleistung aus der Befehlsnachricht ausgesendet und dann die Identifikationsnachricht z.B. mit einer zweiten niedrigeren Sendeleistung nochmals versendet. Alternativ können von der Zentraleinheit aber auch mehrere Befehlsnachrichten, in welchen unterschiedliche Sendeleistungen hinterlegt sind, an die jeweils ausgewählte dezentrale Einheit übermittelt werden.

Durch eine Verwendung mehrerer, unterschiedlicher vordefinierter Sendeleistungen kann die Topologie des Niederspannungsnetzes noch genauer bestimmt werden. Idealer Weise wird dabei die Sendeleistung für die ausgesendeten Identifikationsnachrichten einer gewählten dezentralen Einheit schrittweise reduziert, da eine Anordnung der dezentralen Einheiten bei Aussendungen mit geringerer Sendeleistung genauer ermittelt werden kann. Vor allem bei dezentralen Einheiten, welche in Nähe einer Ortsnetzstation bzw. Transformationsstation und/oder bei einer hohen Anzahl bzw. Dichte von Leitungssträngen angebracht sind, kann einen eindeutige Zuordnung bzw. Anordnung nur durch Nutzung sehr geringer Sendeleistungen bzw. sehr fein abgestufter Sendeleistungen ermittelt werden.

Zweckmäßiger Weise umfasst die von der jeweils ausgewählten dezentralen Einheit ausgesendete Identifikationsnachricht auch die jeweilige Sendeleistung, mit welcher diese Identifikationsnachricht ausgesendet worden ist. Weiterhin kann in den jeweils die Identifikationsnachricht empfangenden dezentralen Einheiten bzw. Zentralstation auch ein Empfangspegel zu dieser Identifikationsnachricht abgespeichert werden, mit welchem diese Identifikationsnachricht empfangen worden ist. Diese beiden Daten - genutzte Sendeleistung sowie Empfangspegel - können in vorteilhafter Weise bei der Ableitung der Topologie des Niederspannungsnetzes als Indikator für eine Anordnung der dezentralen Einheiten - z.B. ihren Entfernungen zueinander - genutzt werden. Üblicherweise sind dabei jene empfangenen Identifikationsnachrichten mit der geringsten Sendeleistung bzw. mit dem geringsten Empfangspegel am aussagekräftigsten, da durch derartige Identifikationsnachrichten z.B. eine Nachbarschaft oder große Nähe dezentraler Einheiten abgeleitet werden kann.

Es ist zweckmäßig, wenn ein Austausch der Befehls- und der Identifikationsnachrichten zwischen der Zentraleinheit und den dezentralen Einheiten bzw. zwischen den dezentralen Einheiten über ein Kommunikationsmedium, insbesondere über Niederspannungskommunikation oder so genannte Powerline Communication, durchgeführt wird. Bei der Niederspannungskommunikation oder Powerline Communication werden ein vorhandenes Stromnetz bzw. Stromleitungen zum Ausbau eines Kommunikationsnetzes mitbenutzt. Dabei muss idealer Weise für die automatische Topologieerkennung kein zusätzliches Kommunikationsmedium installiert werden, sondern es wird das Niederspannungsnetz selbst zur Übertragung der Nachrichten genutzt. Eine bevorzugte Ausgestaltung des erfindungsgemäßen Verfahrens sieht vor, dass die Zentraleinheit in oder bei einer so genannten Ortsnetzstation des Niederspannungsnetzes installiert wird. Die Zentraleinheit ist dabei dort angebracht, wo üblicherweise eine hohe Anzahl von Leitungssträngen und auch eine hohe Anzahl von dezentralen Einheiten im Niederspannungsnetz vorgesehen sind. Außerdem ist damit eine Auswertung der Topologie in vorteilhafter Weise bei der Ortsnetzstation (bzw. Transformationsstation) verfügbar.

Bei einer vorteilhaften Fortbildung des erfindungsgemäßen Verfahrens werden als Zentraleinheit und/oder dezentrale Einheiten Geräteeinheiten für ein Zählerfernabfragesystem, insbesondere Datenknoten, Zähler und/oder Lastschaltgeräte, genutzt. Damit können auf einfache und kostengünstige Weise bereits für eine Zählerfernabfrage im Niederspannungsnetz vorhandene Geräteeinheiten auch zur Topologieerkennung eingesetzt werden. Als Zentraleinheit kann beispielsweise der Datenknoten genutzt werden. Zähler und/oder Lastschaltgeräte, welchen Verbraucher und/oder Erzeuger im Niederspannungsnetz zugeordnet sind, werden idealer Weise als dezentrale Einheiten eingesetzt. Damit sind sehr einfach Positionen im Niederspannungsnetz eruierbar, an welchen großer Verbraucher und/oder Erzeuger angebracht sind und damit Spannungsschwankungen wahrscheinlich sein können.

### Kurzbeschreibung der Zeichnung

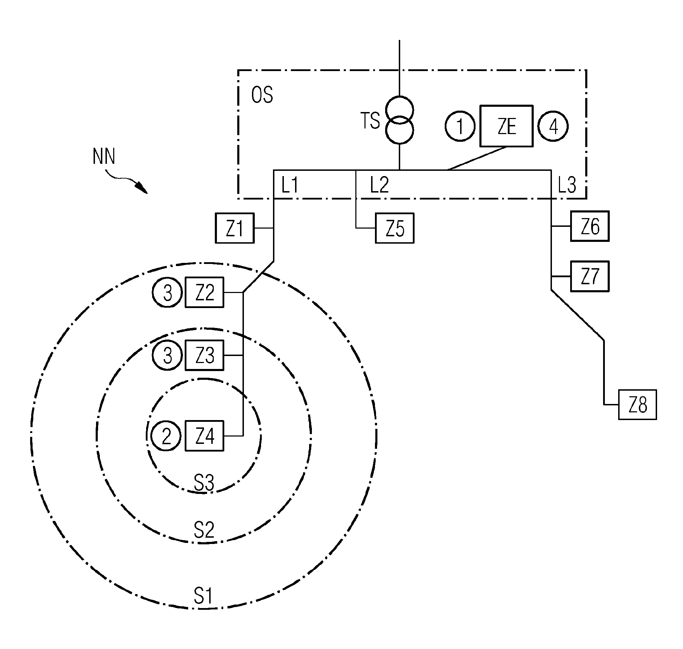

Die Erfindung wird nachfolgend in beispielhafter Weise anhand der beigefügten Figur erläutert. Figur 1 zeigt dabei schematisch und in beispielhafter Weise einen Ablauf des erfindungsgemäßen Verfahrens zur Topologieerkennung in einem beispielhaften Niederspannungsnetz.

### Ausführung der Erfindung

Figur 1 zeigt in schematischer Weise ein beispielhaftes Niederspannungsnetz NN. Dieses Niederspannungsnetz NN umfasst eine beispielhafte Ortsnetzstation OS, in welcher ein Transformator bzw. eine Transformatorstation TS untergebracht ist, durch welche beispielsweise Energie bzw. elektrischer Strom aus einem Mittelspannungsnetz auf ein Spannungsniveau des Niederspannungsnetzes NN transformiert wird. Weiterhin ist in der Ortsnetzstation OS eine Zentraleinheit ZE wie z.B. ein Datenknoten ZE eines Zählerfernabfragesystems angeordnet, von welchem eine Steuerung des erfindungsgemäßen Verfahrens übernommen wird. Von dieser Zentraleinheit ZE können die dezentralen Einheiten Z1 bis Z8 (z.B. Zähler, Lastschaltgeräte, etc.) des Niederspannungsnetzes z.B. über Befehlsnachrichten adressiert werden und es können dabei Nachrichten, Daten, etc. beispielsweise über das Niederspannungsnetz mittels so genannter Niederspannungskommunikation oder Powerline Communication ausgetauscht werden.

Weiterhin weist das beispielhafte Niederspannungsnetz NN drei beispielhafte Leitungsstränge L1, L2, L3 auf. Über die Leitungsstränge L1, L2, L3 werden einerseits die jeweiligen den dezentralen Einheiten Z1 bis Z8 zugeordneten Verbraucher bzw. Verbraucher-Einheiten (z.B. Häuser, Wohneinheiten, Industrieanlagen, etc.) mit elektrischer Energie bzw. Strom versorgt. Andererseits können den dezentralen Einheiten Z1 bis Z8 auch Erzeuger wie z.B. eine Photovoltaik-Anlage zugeordnet sein, von welcher dezentral elektrische Energie bzw. Strom ins Netz NN gespeist wird. Die dezentralen Einheiten Z1 bis Z8 sind entlang der Leitungsstränge L1, L2, L3 angeordnet. So sind beispielsweise die dezentralen Einheiten Z1 bis Z4 entlang eines ersten Leitungsstrangs L1 angebracht. Einem zweiten Leitungsstrang L2 ist z.B. nur eine dezentrale Einheit Z5 zugeordnet. In einem dritten Leitungsstrang L3 sind z.B. die dezentralen Einheiten Z6, Z7, Z8 angeschlossen. Eine genaue Reihenfolge sowie eine Zuordnung der dezentralen Einheiten Z1 bis Z8 sind vor einer Durchführung des erfindungsgemäßen Verfahrens nicht bekannt.

In einem ersten Verfahrensschritt 1 wird von der Zentraleinheit ZE eine dezentrale Einheit Z4 ausgewählt, an welche von der Zentraleinheit ZE eine Befehlsnachricht gezielt gesendet wird. Mit dieser Befehlsnachricht wird die ausgewählte dezentrale Einheit Z4 aufgefordert, ihre Identifikation mit einer von der Zentraleinheit ZE vordefinierten ersten Sendeleistung S1 als Identifikationsnachricht über das Kommunikationsmedium - z.B. das Niederspannungsnetz NN - auszusenden. Da gegebenenfalls die Sendeleistung der Zentraleinheit ZE nicht ausreichend ist, damit die ausgewählte dezentrale Einheit Z4 erreicht wird, kann die Befehlsnachricht beispielsweise von den anderen dezentralen Einheiten Z1, Z2, Z3 sowie Z5 bis Z8 wiederholt werden. Durch dieses so genannte "Hopping" wird sichergestellt, dass die Befehlsnachricht sicher bei der ausgewählten dezentralen Einheit Z4 angelangt, auch wenn diese von der Zentraleinheit ZE kommunikationstechnisch nicht direkt erreicht werden kann.

Nach Erhalt der Befehlsnachricht wird in einem zweiten Verfahrensschritt 2 von der ausgewählten dezentralen Einheit Z4 die Identifikation mit der in der Befehlsnachricht vorgegebenen ersten Sendeleistung S1 als Identifikationsnachricht ausgesendet. In der Identifikationsnachricht kann neben der Identifikation der ausgewählten dezentralen Einheit Z4 auch jene Sendleistung S1 hinterlegt sein, mit welcher die Identifikationsnachricht von der ausgewählten dezentralen Einheit Z4 versendet wird. Damit ist dann für eine Auswertung bekannt, von welcher dezentralen Einheit Z1 bis Z8 mit welcher Sendeleistung eine Identifikation versendet worden ist.

Die ausgewählte dezentrale Einheit Z4 kann die Identifikationsnachricht nicht nur mit einer vordefinierten Sendeleistung

S1, sondern mit unterschiedlichen von der Zentraleinheit ZE vorgegebenen Sendeleistungen S1, S2, S3 übertragen. Diese unterschiedlichen Sendeleistungen S1, S2, S3 können der ausgewählten dezentralen Einheit Z4 beispielweise mit einer Befehlsnachricht von der Zentraleinheit ZE mitgeteilt werden. Das bedeutet einerseits, die Befehlsnachricht der Zentraleinheit umfasst mehrere (z.B. drei) vordefinierte Sendeleistungen S1, S2, S3, wobei die erste Sendeleistung S1 am höchsten und eine dritte Sendeleistung S3 am niedrigsten sein kann. Andererseits besteht auch die Möglichkeit, dass von der Zentraleinheit mehrere gezielte Befehlsnachrichten mit unterschiedlichen Sendeleistungen S1, S2, S3 an die ausgewählte dezentrale Einheit Z4 gesendet werden. D.h. von jeder Befehlsnachricht wird der ausgewählten dezentralen Einheit Z4 eine andere, meist gegenüber der vorangegangenen reduzierte Sendeleistung S1, S2, S3 zum Aussenden der Identifikationsnachricht vorgegeben.

Bei beiden Varianten wird dann von der ausgewählten dezentralen Einheit Z4 im zweiten Verfahrensschritt 2 jeweils eine Identifikationsnachricht für jede jeweils von der Zentraleinheit ZE vordefinierte Sendeleistung S1, S2, S3 versendet. D.h. wie z.B. in Figur 1 beispielhaft dargestellt, dass von der ausgewählten dezentralen Einheit Z4 zuerst eine erste Identifikationsnachricht mit einer ersten Sendeleistung S1 ausgeschickt wird. Dann wird eine zweite Identifikationsnachricht mit einer zweiten - z.B. reduzierten (z.B. 50% der ersten Sendeleistung S1) - Sendeleistung S2 gesendet und danach wird beispielsweise von der ausgewählten Einheit Z4 eine dritte Identifikationsnachricht mit einer dritten - z.B. weiter reduzierten (z.B. 25% der ersten Sendeleistung S1) - Sendeleistung S3 ausgesendet. In jeder dieser Identifikationsnachrichten ist dabei die jeweils verwendete Sendeleistung hinterlegt.

In einem dritten Verfahrensschritt 3 wird dann die von der ausgewählten dezentralen Einheit Z4 ausgesendete Identifikationsnachricht bzw. bei mehreren Sendeleistungen die unterschiedlichen ausgesendeten Identifikationsnachrichten von jenen dezentralen Einheiten Z1 bis Z8 des Niederspannungsnetzes NN abgespeichert, von welchen die jeweilige Identifikationsnachricht auch empfangen worden ist. Zusätzlich kann von der jeweiligen eine Identifikationsnachricht empfangenden dezentralen Einheit Z1 bis Z8 auch ein Empfangspegel bzw. eine Empfangsleistung mit der Identifikationsnachricht abgespeichert werden. Dieser Empfangspegel kann dann gemeinsam mit der in der jeweiligen Identifikationsnachricht hinterlegten Sendeleistung als Indikator für eine Anordnung zur sendenden dezentralen Einheit Z4 genutzt werden.

Wird nun beispielsweise wie in Figur 1 dargestellt von der ausgewählten dezentralen Einheit Z4 eine erste Identifikationsnachricht mit einer ersten Sendeleistung S1 ausgesendet, so kann diese erste Identifikationsnachricht von zwei weiteren dezentralen Einheiten Z2, Z3 im ersten Leitungsstrang L1 empfangen werden. Von diesen beiden dezentralen Einheiten Z2, Z3 wird dann im dritten Verfahrensschritt 3 diese erste Identifikationsnachricht z.B. gemeinsam mit dem entsprechenden Empfangspegel temporär abgespeichert. Werden nun von der ausgewählten dezentralen Einheit weitere Identifikationsnachrichten mit niedrigeren Sendeleistungen S2, S3 versendet, so können diese beispielsweise nicht mehr von allen dezentralen Einheiten Z2, Z3 gehört werden, von welchen noch die erste Identifikationsnachricht empfangen worden ist. Die zweite Identifikationsnachricht der ausgewählten dezentralen Einheit Z4, welche mit der zweiten Sendeleistung S2 (z.B. 50% der ersten Sendeleistung S1) ausgesendet wird, kann beispielsweise nur mehr von einer dezentralen Einheit Z3 - der zur ausgewählten zentralen Einheit Z4 benachbarten dezentralen Einheit Z3 - gehört und gespeichert werden. Bei Versand der dritten Identifikationsnachricht mit der dritten Sendeleistung S3 (z.B. 25% der ersten Sendeleistung S1) wird diese Identifikationsnachricht z.B. von keiner weiteren dezentralen Einheit empfangen.

Dieser Ablauf wird - gesteuert durch die Zentraleinheit ZE - für alle dezentralen Einheiten Z1 bis Z8 im Niederspannungsnetz mit für jede dezentrale Einheit mit zumindest einer vordefinierten Sendeleistung S1, S2, S3 durchgeführt. Dabei werden dann von jeder dezentralen Einheit Z1 bis Z8 jene Identifikationsnachrichten mit dem jeweiligen Empfangspegel temporär abgespeichert, welche von dieser dezentralen Einheit Z1 bis Z8 empfangen werden. Weiterhin kann auch von der Zentraleinheit ZE selbst eine Identifikationsnachricht mit definierter Sendeleistung S1, S2, S3 versendet werden. Diese Information wird dann von den dezentralen Einheiten Z1 bis Z8, welche die Identifikationsnachricht der Zentraleinheit ZE erhalten haben, ebenso gespeichert wie die Identifikationsinformationen der anderen dezentralen Einheiten Z1 bis Z8. Weiterhin können auch von der Zentraleinheit ZE Identifikationsnachrichten der dezentralen Einheiten Z1 bis Z8 gespeichert werden. Auf diese Weise kann dann in einem vierten Verfahrensschritt 4 auch eine Position bzw. eine Anordnung der Zentraleinheit ZE in Relation zu den dezentralen Einheiten Z1 bis Z8 des Niederspannungsnetzes NN ermittelt werden.

Im vierten Verfahrensschritt 4 - nachdem alle dezentralen Einheiten Z1 bis Z8 von der Zentraleinheit ZE zum Versand von Identifikationsnachrichten aufgefordert worden sind - werden von der Zentraleinheit ZE die in den dezentralen Einheiten Z1 bis Z8 abgelegten Identifikationsnachrichten z.B. gemeinsam mit den jeweils dazu hinterlegten Empfangspegeln abgefragt. Diese Daten werden dann von der Zentraleinheit ZE eingesammelt und ausgewertet und können dann als Topologie des Niederspannungsnetzes NN z.B. dargestellt werden.

Für eine Auswertung durch die Zentraleinheit ZE sind üblicherweise jene von dezentralen Einheiten Z1 bis Z4 gespeicherten Identifikationsnachrichten am aussagekräftigsten, welche mit einer möglichst geringen Sendeleistung S1, S2, S3 versendet bzw. bei einer möglichst geringen Sendeleistung S1, S2, S3 empfangen worden sind. Durch die vordefinierte Sendeleistung S1, S2, S3 ergibt sich für jede dezentrale Einheit Z1 bis Z8 - wie in Figur 1 beispielsweise für die ausgewählte dezentrale Einheit Z4 dargestellt - ein durch die jeweilige Sendeleistung S1, S2, S3 definierter Radius, in welchem die Identifikationsnachricht der jeweils ausgewählten dezentralen Einheit Z1 bis Z8 empfangen werden kann. Damit kommen dann nur bestimmte dezentrale Einheiten Z2, Z3 in Frage, welche in der Nähe der beispielsweise betrachteten dezentralen Einheit Z4 angeordnet sein können. Da beispielsweise von der dezentralen Einheit Z3 die Identifikationsnachricht der ausgewählten dezentralen Einheit Z4 auch noch mit der geringeren zweiten Sendeleistung S2 empfangen werden konnte, ist diese z.B. näher an bzw. eine direkte Nachbar-Einheit der ausgewählten dezentralen Einheit Z4.

Auf diese Weise kann dann aus den jeweiligen in den dezentralen Einheiten Z1 bis Z8 hinterlegten Identifikationsnachrichten eine Anordnung der dezentralen Einheiten Z1 bis Z8 im Niederspannungsnetz NN sowie eine Zuordnung der dezentralen Einheiten Z1 bis Z8 zu den Leitungssträngen L1, L2, L3 ermittelt werden. Durch die Nutzung von z.B. Niederspannungskommunikation bzw. Powerline Communication für den Versand der Befehls- und Identifikationsnachrichten, wobei die versendete Identifikationsnachrichten nicht von anderen dezentralen Einheiten Z1 bis Z8 wiederholt werden, können diese Nachrichten immer nur in einem bestimmten Radius empfangen werden. Meist wird der Empfang der Nachrichten nur im jeweiligen Leitungsstrang L1, L2, L3 erfolgen, an welchen die sendende dezentrale Einheit Z1 bis Z8 angeschlossen ist. Bei dezentralen Einheiten Z1 bis Z8 in der Nähe der Zentraleinheit ZE wird der Empfang der Nachrichten in unterschiedlichen Leitungssträngen L1, L2, L3, erfolgen, wobei die empfangenden dezentralen Einheiten Z1 bis Z8 nahe der Zentraleinheit ZE angebracht sind. Es kann damit bei der Auswertung auch sehr rasch eine Zuordnung der dezentralen Einheiten Z1 bis Z8 zu den jeweiligen Leitungssträngen L1, L2, L3 des Niederspannungsnetzes NN abgeleitet werden.

Durch das erfinderische Verfahren kann allerdings nicht auf z.B. Kabelquerschnitt oder Kabellängen geschlossen werden. Auch ist die Reichweite der mit einer vorgegebenen Sendeleistung S1, S2, S3 ausgesendeten Identifikationsnachricht davon abhängig, ob beispielsweise Kabel, Freileitungen oder eine gemischte Form im Niederspannungsnetz NN zum Einsatz kommen, da eine Dämpfung der jeweiligen Identifikationsnachricht dadurch unterschiedlich stark sein kann. Weiterhin kann es an so genannten Klemmstellen im Niederspannungsnetz NN zu einer Abschwächung kommen. Daher wird für die Auswertung bzw. die Ableitung der Topologie des Niederspannungsnetzes NN beispielweise ein Unterschied zwischen den Empfangspegeln, welche bei den jeweiligen Identifikationsnachrichten in den einzelnen dezentralen Einheiten Z1 bis Z8 abgespeichert worden sind, herangezogen. Dieser Unterschied ist dann z.B. aussagekräftiger für ein Ermitteln der Topologie als z.B. ein Absolutwert des Empfangspegels.

Nach einer Abfrage und Auswertung der Identifikationsnachrichten durch die Zentraleinheit ZE können die Identifikationsnachrichten beispielsweise von den dezentralen Einheiten Z1 bis Z8 wieder gelöscht werden.

## Patentansprüche

1. Verfahren zur Topologieerkennung in einem Niederspannungsnetz (NN) mit einer Mehrzahl an dezentralen Einheiten (Z1, ..., Z8), welchen jeweils wenigstens ein Verbraucher und/oder ein Erzeuger zugeordnet ist, sowie zumindest einer Zentraleinheit (ZE), von welcher die dezentralen Einheiten (Z1, ..., Z8) mittels Befehlsnachrichten adressierbar sind, und von welcher Nachrichten empfangen werden, **dadurch gekennzeichnet, dass** von der Zentraleinheit (ZE) eine jeweils ausgewählte dezentrale Einheit (Z1, ..., Z8) durch eine Befehlsnachricht zum Aussenden einer jeweiligen Identifikation mit zumindest einer vordefinierten Sendeleistung (S1, S2, S3) aufgefordert wird (1), dass dann von der jeweils ausgewählten dezentralen Einheit (Z1, ..., Z8) die Identifikation mit der zumindest einen vordefinierten Sendeleistung (S1, S2, S3) als Identifikationsnachricht ausgesendet wird (2), dass dann die ausgesendete Identifikationsnachricht der jeweils ausgewählten dezentralen Einheit (Z1, ..., Z8) von allen weiteren dezentralen Einheiten (Z1, ..., Z8), von welchen die Identifikationsnachricht bei der zumindest einen vordefinierten Sendeleistung (S1, S2, S3) empfangen worden ist, temporär gespeichert wird (3).

2. Verfahren nach Anspruch 1, **dadurch gekennzeichnet, dass** weiterhin von der Zentraleinheit (ZE) empfangene Identifikationsnachrichten der jeweils ausgewählten dezentralen Einheit (Z1, ..., Z8) in der Zentraleinheit (ZE) gespeichert werden (3).

3. Verfahren nach einem der Ansprüche 1 bis 2, **dadurch gekennzeichnet, dass** die in den dezentralen Einheiten (Z1, ..., Z8) und/oder in der Zentraleinheit (ZE) gespeicherten Identifikationsnachrichten durch die Zentraleinheit (ZE) abgefragt und analysiert werden (4).

4. Verfahren nach einem der Ansprüche 1 bis 3, **dadurch gekennzeichnet, dass** weiterhin von der Zentraleinheit (ZE) selbst eine Identifikationsnachricht mit zumindest einer vordefinierten Sendeleistung (S1, S2, S3) ausgesendet wird (2), welche von den jeweils diese Identifikationsnachricht empfangenden dezentralen Einheiten (Z1, ..., Z8) temporär abgespeichert wird (3).

5. Verfahren nach einem der Ansprüche 1 bis 4, **dadurch gekennzeichnet, dass** von der Zentraleinheit (ZE) ausgesendeten Befehlsnachrichten von den weiteren im Niederspannungsnetz (NN) befindlichen dezentralen Einheiten (Z1, ..., Z8) wiederholt werden (1).

6. Verfahren nach einem der Ansprüche 1 bis 5, **dadurch gekennzeichnet, dass** der jeweils ausgewählten dezentralen Einheit (Z1, ..., Z8) von der Zentraleinheit (ZE) in der gesendeten Befehlsnachricht zumindest eine weitere Sendeleistung (S1, S2, S3) zum Aussenden der Identifikation vorgegeben wird (1).

7. Verfahren nach einem der Ansprüche 1 bis 5, **dadurch gekennzeichnet, dass** der jeweils ausgewählten dezentralen Einheit (Z1, ..., Z8) von der Zentraleinheit (ZE) zumindest eine weitere Befehlsnachricht mit einer weiteren Sendeleistung (S1, S2, S3) zum Aussenden der Identifikation gesendet wird (1).

8. Verfahren nach einem der Ansprüche 1 bis 7, **dadurch gekennzeichnet, dass** in der jeweils von der jeweils ausgewählten dezentralen Einheit (Z1, ..., Z8) ausgesendeten Identifikationsnachricht die jeweilige Sendeleistung (S1, S2, S3) eingetragen wird, mit welcher diese Identifikationsnachricht ausgesendet wird (2).

9. Verfahren nach einem der Ansprüche 1 bis 8, **dadurch gekennzeichnet, dass** zur jeweils empfangenen Identifikationsnachricht ein Empfangspegel abgespeichert wird, mit welcher die jeweilige Identifikationsnachricht empfangen worden ist (3).

10. Verfahren nach einem der Ansprüche 1 bis 9, **dadurch gekennzeichnet, dass** ein Austausch der Befehls- und der Identifikationsnachrichten zwischen Zentraleinheit (ZE) und den dezentralen Einheiten (Z1, ..., Z8) und/oder zwischen den dezentralen Einheiten (Z1, ..., Z8) über ein Kommunikationsmedium (L1, L2, L3), insbesondere über Niederspannungskommunikation, durchgeführt wird (1, 2, 4).

11. Verfahren nach einem der Ansprüche 1 bis 10, **dadurch gekennzeichnet, dass** die Zentraleinheit (ZE) in oder bei einer so genannten Ortsnetzstation (OS) des Niederspannungsnetzes (NN) installiert wird.

12. Verfahren nach einem der Ansprüche 1 bis 11, **dadurch gekennzeichnet, dass** als Zentraleinheit (ZE) und/oder dezentrale Einheiten (Z1, ..., Z8) Geräteeinheiten für ein Zählerfernabfragesystem, insbesondere Datenknoten, Zähler und/oder Lastschaltgeräte, genutzt werden.
